# FASCICULE DE BREVET EUROPEEN

(11) **EP 4 041 634 B1**
(45) Date de publication et mention de la délivrance du brevet: **29.11.2023**
(21) Numéro de dépôt: 20793757.4
(22) Date de dépôt: 07.10.2020
(51) Int. Cl.: B64D 33/08, B64D 29/00, B64D 27/24, B64C 27/20, B64C 27/28, B64C 29/00

(54) **NACELLE DE MOTEUR ÉLECTRIQUE D'AÉRONEF À DÉCOLLAGE ET ATTERRISSAGE VERTICAUX ET AÉRONEF COMPORTANT UNE TELLE NACELLE**
ELEKTROMOTORISCHE GONDEL FÜR SENKRECHT STARTENDE UND LANDENDE FLUGZEUGE UND FLUGZEUG, DAS EINE SOLCHE GONDEL UMFASST
ELECTRIC MOTOR NACELLE FOR VERTICAL TAKE-OFF AND LANDING AIRCRAFT AND AIRCRAFT COMPRISING SUCH A NACELLE

(30) Priorité: 10.10.2019 FR 1911243
(43) Date de publication de la demande: 17.08.2022
(73) Titulaire: Safran Electrical & Power, 31702 Blagnac (FR)
(72) Inventeur: CASTELLI, Christophe, 77550 MOISSY-CRAMAYEL (FR); MESNIL, Valentin Antoine Maxime, 77550 MOISSY-CRAMAYEL (FR); THIAM, Abdoulahad, 77550 MOISSY-CRAMAYEL (FR)
(74) Mandataire: Cabinet Camus Lebkiri
(86) Numéro de dépôt international: PCT/FR2020/051760
(87) Numéro de publication internationale: WO 2021/069834

(56) Documents cités:
- EP-A1- 2 774 853
- FR-A1- 2 871 136
- US-A1- 2018 051 716

## Description

### DOMAINE TECHNIQUE DE L'INVENTION

La présente invention concerne une nacelle de moteur électrique d'aéronef à décollage et atterrissage verticaux, ou VTOL (acronyme de l'expression anglo-saxonne « Take-off and Landing Aircraft »). Elle concerne également un VTOL équipé d'une telle nacelle.

L'invention trouve des applications dans le domaine de l'aéronautique et, en particulier, dans le domaine des moteurs électriques de VTOL.

### ARRIERE-PLAN TECHNOLOGIQUE DE L'INVENTION

Les constructeurs aéronautiques cherchent à développer des aéronefs à décollage et atterrissage verticaux (VTOL) qui peuvent s'affranchir des pistes habituellement nécessaires pour le décollage et l'atterrissage des avions classiques. Il existe plusieurs types de VTOL répertoriés en fonction des moteurs utilisés. Certains VTOL, appelés par la suite plus simplement aéronefs, sont équipés de plusieurs moteurs élévateurs (ou « Lift Motors » en termes anglo-saxons) positionnés suivant un axe vertical pour assurer le décollage et l'atterrissage de l'aéronef et de moteurs de propulsion (ou « Tilt Motors » en termes anglo-saxons) positionnés classiquement suivant un axe horizontal pour assurer le vol de l'aéronef en mode croisière.

Les moteurs de propulsion de ces types d'aéronefs sont généralement montés sur des poutres solidaires du fuselage de l'aéronef ou sous la voilure de l'aéronef de sorte que leurs axes de rotation soient parallèles au fuselage dudit aéronef.

Les moteurs élévateurs, généralement plus nombreux que les moteurs de propulsion pour des raisons de puissance plus importante à l'élévation qu'en croisière, sont montés sur des poutres solidaires du fuselage de l'aéronef ou sur la voilure de l'aéronef, généralement en aval ou, au contraire, en amont des moteurs de propulsion. Chacun des moteurs élévateurs est un moteur électrique qui comporte un axe de rotation sensiblement perpendiculaire au plan de la voilure et prolongé par une hélice à plusieurs pales. Les moteurs élévateurs doivent être refroidis pendant toute la durée du vol, aussi bien pendant les phases d'élévation (décollage et atterrissage) que pendant la phase de croisière. En effet, même si en phase de croisière les hélices ne tournent pas, les moteurs élévateurs doivent tout de même être refroidis afin que l'échauffement provoqué par le décollage ait été dissipé au moment de l'atterrissage.

Plus précisément, pendant les phases d'élévation, c'est-à-dire de décollage ou d'atterrissage, l'hélice tourne et l'aéronef s'élève, ce qui génère un flux d'air vertical entrant dans le moteur élévateur par sa face supérieure 26 en regard de l'hélice. L'air traverse le moteur et le refroidit via des surfaces d'échange, de type ailettes, montées sur le moteur. Pendant la phase de croisière, l'aéronef est propulsé suivant une direction sensiblement horizontale par les moteurs de propulsion. Le flux d'air généré par le déplacement de l'aéronef est alors horizontal. Comme les hélices des moteurs élévateurs sont arrêtées, le flux d'air généré par le déplacement de l'aéronef lèche les surfaces extérieures des moteurs élévateurs sans toutefois pénétrer à l'intérieur desdits moteurs et accéder aux surfaces d'échange.

Actuellement, afin que l'air généré par le déplacement de l'aéronef refroidisse un tant soit peu les moteurs élévateurs pendant la phase de croisière, il a été choisi par les avionneurs de laisser lesdits moteurs élévateurs en extérieur de la structure de l'aéronef et donc de ne pas les caréner. Or, si l'absence de carénage permet au flux d'air de refroidir les moteurs élévateurs par contact avec leurs surfaces extérieures, cette absence de carénage a pour effet également de générer des pertes aérodynamiques. En effet, comme cela est connu dans le domaine de l'aéronautique, toute pièce ou partie de pièce qui ne satisfait pas à un profil aérodynamique génère une trainée aérodynamique. Cette trainée aérodynamique est d'autant plus importante que la pièce ou partie de pièce est positionnée perpendiculairement au plan de l'aéronef. Les trainées aérodynamiques générées par chacun des moteurs élévateurs ont pour conséquence d'entraîner une surconsommation de l'énergie nécessaire au vol de l'aéronef et cette surconsommation d'énergie, en plus d'être couteuse, a un impact direct sur l'autonomie du moteur, lorsque le moteur est un moteur électrique.

Des documents, comme le document de brevet US 2018/051716 A1 ou le document de brevet FR 2 871 136 A1 ou encore le document de brevet EP 2 774 853 A1, divulguent des carénages abritant un moteur électrique pour aéronef. Cependant, aucun de ces documents ne concerne un moteur électrique équipé d'une hélice qui s'étend en extérieur de carénage, au-dessus du carénage. D'autres VTOL sont équipés, à la place des moteurs d'élévation, de moteurs dits « orientables ». Ces moteurs orientables ont l'avantage de pouvoir pivoter sur euxmêmes de sorte que leurs axes de rotation puissent passer d'une position sensiblement verticale pendant les phases d'élévation à une position sensiblement horizontale pendant la phase de croisière. En conséquence, quelle que soit la phase de vol, l'axe de ces moteurs orientables est toujours dans le flux d'air généré par le déplacement de l'aéronef. Les moteurs orientables peuvent donc être correctement refroidis aussi bien en phase d'élévation qu'en phase de croisière. Cependant, ces moteurs orientables sont plus difficiles à mettre en oeuvre que les moteurs élévateurs et nécessitent un système de commande relativement complexe, ce qui a pour conséquence un coût de fabrication plus élevé.

Il existe donc, pour les moteurs élévateurs, un besoin d'un carénage permettant de limiter les pertes aérodynamiques générées par lesdits moteurs tout en permettant le refroidissement desdits moteurs aussi bien pendant les phases d'élévation que pendant la phase de croisière.

### RESUME DE L'INVENTION

Pour répondre aux problèmes évoqués ci-dessus des pertes aérodynamiques générées par les moteurs élévateurs et du refroidissement de ces moteurs élévateurs pendant les phases d'élévation et de croisière, le demandeur propose une nacelle de moteur électrique de VTOL, de préférence de type avion, équipée d'un collecteur réversible d'alimentation et d'échappement de fluide de refroidissement.

Selon un premier aspect, l'invention concerne une nacelle de moteur électrique d'aéronef à décollage et atterrissage verticaux (VTOL) comportant :
- un moteur électrique,
- un carénage dans lequel est logé ledit moteur électrique équipé d'au moins une hélice s'étendant à l'extérieur d'une face supérieure du carénage, et
- un dispositif de refroidissement adapté pour refroidir le moteur lorsque l'aéronef est en phases de décollage, de croisière et d'atterrissage et comportant un collecteur réversible d'alimentation et d'échappement de fluide de refroidissement, adapté pour, alternativement :
   o en phase de croisière, recevoir un flux de fluide froid généré par le déplacement de l'aéronef et diriger ce flux de fluide, à travers le moteur, vers une sortie située en regard de l'hélice, et
   o en phase de décollage ou d'atterrissage, réceptionner un flux de fluide chaud transmis par l'hélice et ayant transité à travers le moteur.

Cette nacelle de moteur électrique permet audit moteur d'être intégré dans un carénage à profil aérodynamique tout en étant refroidi aussi bien en phase de croisière qu'en phase d'élévation.

Par définition, le flux de fluide chaud transmis par l'hélice est un flux de fluide de refroidissement transmis par l'hélice et réchauffé lors de son transit à travers le moteur par contact avec des surfaces d'échanges thermiques dudit moteur.

Avantageusement, le collecteur réversible est positionné sur une face inférieure du carénage, opposée à la face supérieure.

Outre les caractéristiques qui viennent d'être évoquées dans le paragraphe précédent, la nacelle selon un aspect de l'invention peut présenter une ou plusieurs caractéristiques complémentaires parmi les suivantes, considérées individuellement ou selon toutes les combinaisons techniquement possibles :
- le collecteur réversible est une chambre à profil aérodynamique équipée d'une ouverture d'admission et d'échappement du fluide et d'une pluralité de canaux de répartition du fluide.
- les canaux de répartition sont répartis dans une structure interne du collecteur réversible entre l'ouverture d'admission et d'échappement et une face inférieure du moteur de sorte à diriger le flux de fluide depuis l'ouverture vers des surfaces d'échanges thermiques du moteur ou depuis la face inférieure du moteur vers l'ouverture du collecteur réversible.
- le collecteur réversible présente une forme d'écope dans le carénage.
- le collecteur réversible présente une forme de prise NACA dans le carénage.
- le carénage entourant le moteur électrique comporte une forme aérodynamique s'étendant en s'évasant de la face supérieure vers la face inférieure, de sorte à générer une dépression entre la face supérieure et la face inférieure.
- la face supérieure du carénage entourant le moteur électrique comporte au moins un bossage générant un effet Venturi.
- les surfaces d'échange du moteur électrique s'étendent sensiblement verticalement entre la face inférieure et la face supérieure du moteur électrique.
- l'ouverture du collecteur réversible est dirigée vers l'avant du carénage.

Un autre aspect de l'invention concerne un VTOL équipé d'une telle nacelle de moteur électrique.

### BREVE DESCRIPTION DES FIGURES

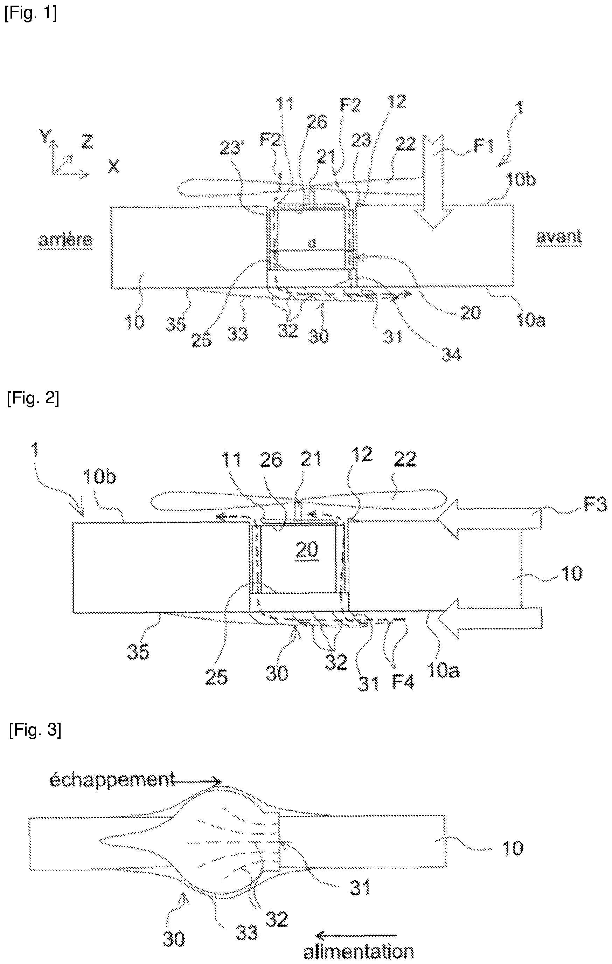

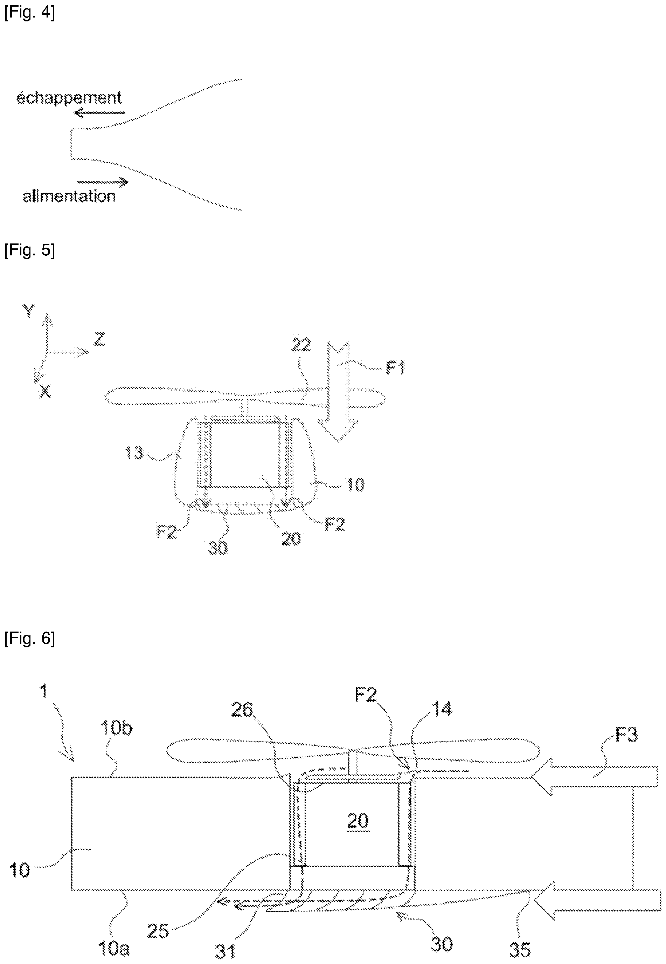

D'autres avantages et caractéristiques de l'invention apparaîtront à la lecture de la description qui suit, illustrée par les figures dans lesquelles :
▪ La figure 1 représente une vue schématique de côté d'un exemple de nacelle de moteur électrique pour VTOL selon l'invention, en phase d'élévation ;
▪ La figure 2 représente une vue schématique de côté de l'exemple de nacelle de la figure 1, pendant la phase de croisière ;
▪ La figure 3 représente une vue schématique de dessous d'un exemple de collecteur réversible d'alimentation et d'échappement de fluide de refroidissement de la nacelle selon l'invention ;
▪ La figure 4 représente une vue schématique d'un exemple d'ouverture du collecteur réversible selon l'invention,
▪ La figure 5 représente une vue schématique de face, en coupe, d'un autre exemple de nacelle de moteur électrique pour VTOL selon l'invention ;
▪ La figure 6 représente une vue schématique de côté d'un autre exemple de nacelle de moteur électrique pour VTOL, pendant la phase de croisière, dans lequel l'ouverture du collecteur réversible est dirigée vers l'arrière du carénage.

### DESCRIPTION DETAILLEE

Un exemple de réalisation d'une nacelle de moteur électrique pour VTOL configurée pour limiter la trainée aérodynamique et permettre un refroidissement dudit moteur est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

Sur les figures 1 et 2, un exemple d'une nacelle de moteur élévateur pour VTOL - appelé aussi aéronef - est représenté schématiquement selon une vue en coupe longitudinale, c'est-à-dire suivant un plan XY où X est l'axe de déplacement de l'aéronef en phase de croisière et Y est l'axe de déplacement de l'aéronef en phases d'élévation. Comme représenté sur ces figures 1 et 2, la nacelle 1 selon l'invention comporte un carénage 10 dans lequel est inséré le moteur élévateur 20.

Le carénage 10 est un carénage à profil aérodynamique adapté pour limiter les pertes aérodynamiques dues à la présence du moteur élévateur. Le carénage peut prendre, par exemple, une forme ovale, une forme oblongue ou toute forme de profil aérodynamique symétrique, asymétrique, convexe ou biconvexe.

Le moteur élévateur 20 est intégré dans le carénage 10 de sorte que son axe de rotation 21, qui porte une ou plusieurs hélices 22, soit parallèle à l'axe Y. Le moteur élévateur du VTOL est un moteur électrique qui comporte un axe de rotation sensiblement perpendiculaire au plan de la voilure de l'aéronef et qui est surmonté d'une hélice L'hélice 22 s'étend à l'extérieur d'une face supérieure 10b du carénage 10 de sorte que le plan dans lequel les pales de l'hélice sont en rotation est sensiblement parallèle à ladite face supérieure du carénage.

Le moteur élévateur 20 comporte, comme tout moteur électrique, divers composants internes dont un rotor monté autour de l'axe de rotation et un stator monté autour du rotor, l'ensemble pouvant être protégé par un carter. Le stator et/ou le carter peuvent comporter, sur leur(s) surface(s) externe(s), des surfaces d'échanges thermiques telles que, par exemple, des ailettes de refroidissement, qui permettent, par échanges thermiques entre un fluide de refroidissement et lesdites surfaces d'échanges, de refroidir le moteur électrique.

Le moteur élévateur peut être un moteur équipé de son électronique (appelé Smart Moteur), Dans ce cas l'électronique profite également du refroidissement obtenu grâce au dispositif de l'invention.

Le fluide de refroidissement peut être de l'air ou bien de l'air associé à un autre fluide, comme de l'huile. Dans la suite de la description, l'invention sera décrite dans le cas où le fluide est de l'air, étant entendu que les moyens mis en oeuvre dans le cadre de l'invention sont identiques pour de l'air seul ou pour une association air et autre fluide, un échangeur air/fluide étant alors prévu à l'intérieur du carénage 10.

La nacelle 1 selon l'invention comporte un collecteur réversible 30 pour l'alimentation et l'échappement de l'air de refroidissement, logé dans le carénage 10. Selon certains modes de réalisation, ce collecteur réversible 30 s'étend sur une partie au moins de la face inférieure 10a du carénage, cette face inférieure 10a étant la face de la nacelle en regard du sol, c'est-à-dire la face opposée à la face supérieure 10b au-dessus de laquelle s'étend la ou les hélices 22. Dans ces modes de réalisation, l'ouverture du collecteur réversible 30 peut être dirigée soit vers l'arrière du carénage, soit vers l'avant du carénage. Dans d'autres modes de réalisation, le collecteur réversible 30 s'étend sur une partie au moins de la face supérieure 10b du carénage, cette face supérieure 10b étant la face de la nacelle sur laquelle s'étend la ou les hélices 22. Dans ces modes de réalisation, le collecteur réversible 30 est équipé de trous permettant le passage de l'air dans les phases de décollage et d'atterrissage, ces modes de réalisation ayant pour avantage de générer encore moins de trainée que les modes de réalisation avec le collecteur réversible en face inférieure.

Le collecteur réversible 30 est une chambre formée à l'intérieur du carénage 10. Cette chambre comporte une ouverture 31 d'admission et d'échappement de l'air, une paroi extérieure 33 et, éventuellement, une paroi intérieure 34. Lorsqu'elle existe, la paroi intérieure 34 est en contact avec le moteur élévateur 20 et est équipée d'orifices permettant le passage d'air. La paroi extérieure 33 s'étend sur une longueur au moins égale au diamètre « d » du moteur élévateur 20 et, de préférence, supérieure à ce diamètre d. La paroi extérieure 33 présente un profil aérodynamique entre l'ouverture 31 d'admission et d'échappement de l'air et une extrémité fermée 35 de la chambre. Dans certains modes de réalisation, la paroi extérieure 33 est formée par la face inférieure 10a du carénage. Dans d'autres modes de réalisation, la paroi extérieure 33 est une paroi propre au collecteur réversible ; dans ce cas, la face inférieure 10a du carénage comporte un orifice en regard du moteur élévateur 20 et le collecteur réversible 30 est alors rapporté sur la face inférieure 10a du carénage à laquelle il est fixé par tout moyen de fixation utilisé classiquement dans le domaine de l'aéronautique.

Selon le mode de réalisation des figures 1 et 2, le collecteur réversible 30 est monté sous le moteur élévateur 20 de sorte que son ouverture 31 soit en amont du flux d'air généré par le déplacement de l'aéronef, c'est-à-dire que l'ouverture 31 soit dirigée vers l'avant du carénage et que l'extrémité fermée soit dirigée vers l'arrière dudit carénage. On appelle « avant du carénage », la zone d'extrémité du carénage situé en amont du flux d'air généré par le déplacement de l'aéronef, c'est-à-dire la zone la plus proche de l'avant de l'aéronef. A contrario, on appelle « arrière du carénage », la zone d'extrémité du carénage situé en aval du flux d'air généré par le déplacement de l'aéronef, c'est-à-dire la zone la plus proche de l'arrière de l'aéronef.

La paroi extérieure 33 et/ou la paroi intérieure 34 du collecteur réversible 30 comportent une pluralité de canaux 32 de répartition de l'air. Ces canaux 32 de répartition de l'air peuvent être des sillons creusés dans le matériau formant la face interne des parois 33, 34 ou formés par ajout de rives (par exemple par soudage, collage ou brasage) sur la face interne desdites parois 33, 34. Les canaux 32 de répartition de l'air peuvent également être réalisés d'une seule pièce avec l'ensemble du collecteur réversible par coulage, moulage, extrusion, emboutissage, laminage, fabrication additive ou tout autre procédé de fabrication adapté à la fabrication du carénage.

Les canaux 32 de répartition de l'air s'étendent de l'ouverture 31 d'admission et d'échappement de l'air jusqu'au moteur élévateur 20 en suivant un trajet prédéfini, conçu pour orienter à la fois le flux d'air de l'ouverture 31 vers le moteur élévateur 20 et du moteur élévateur 20 vers l'ouverture 31. En particulier, les canaux 32 de répartition de l'air sont répartis sur les parois 33, 34 du collecteur réversible de sorte que le flux d'air soit orienté de l'ouverture 31 vers les zones dans lesquelles sont localisées les surfaces d'échanges thermiques (en particulier les ailettes) comme par exemple les zones périphériques 23, 23' du moteur élévateur.

Un exemple d'un collecteur réversible 30 est représenté, selon une vue de dessous, sur la figure 3. Dans cet exemple, le collecteur réversible 30 a une forme de sphère pointue comportant une base ouverte formant l'ouverture 31 et une pointe formant l'extrémité fermée 35. Les canaux 32 de répartition de l'air se déploient dans la zone cylindrique interne de la chambre, à partir de l'ouverture 31 et jusqu'à l'entrée des zones périphériques 23, 23' contenant les surfaces d'échanges thermiques. On notera que le collecteur réversible 30 peut prendre toutes sortes de formes, dès lors que ces formes présentent un profil aérodynamique. En particulier, le collecteur réversible 30 peut prendre des formes d'écope ou de prises NACA, comme la forme représentée schématiquement sur la figure 4. On appelle « prise NACA » une prise d'air affleurante dont la forme, développée à l'origine par le Comité consultatif national pour l'aéronautique (National Advisory Committee for Aeronautics, en termes anglo-saxons), permet à l'air de pénétrer dans un conduit interne avec une perturbation minimale du débit. Une prise NACA comporte généralement une rampe peu profonde avec des parois incurvées, encastrées dans la surface exposée à l'air, à savoir le carénage. De nombreuses formes de prises NACA peuvent être envisagées. Dans les exemples où le collecteur réversible 30 prend la forme d'une prise NACA, les canaux 32 de répartition de l'air peuvent s'étendre dès la rampe de la prise NACA. Le nombre de canaux 32 de répartition de l'air et leurs trajectoires dépendent bien entendu des dimensions du moteur élévateur, mais aussi de la localisation des surfaces d'échanges thermiques et de la forme du collecteur réversible. Les canaux peuvent être, par exemple au nombre de 5, sur une hauteur de 15 mm, avec un espacement variable qui commence tous les 15 mm pour s'élargir de sorte à distribuer au mieux le flux d'air vers les échangeurs thermiques.

Le collecteur réversible 30 tel qu'il vient d'être décrit permet, d'une part, d'alimenter le moteur élévateur 20 en air frais lors de la phase de croisière et, d'autre part, d'évacuer l'air chaud dudit moteur lors des phases d'élévation. En phase de croisière, le collecteur réversible 30 collecte et dirige l'air vers le moteur pour assurer son refroidissement et en phase d'élévation, il permet à l'air de s'échapper sans générer de perturbation aérodynamique pour l'aéronef.

Comme expliqué précédemment, les phases d'élévation sont les phases de décollage et les phases d'atterrissage de l'aéronef. Pendant ces phases d'élévation, les moteurs élévateurs sont en marche et leurs hélices tournent. Comme représenté sur la figure 1, le flux d'air généré par l'hélice et par le déplacement de l'aéronef pendant une phase d'élévation, par exemple le décollage, est orienté suivant une direction sensiblement verticale (c'est-à-dire dans la direction Y). Le flux d'air frais, représenté par la flèche en traits pleins F1, pénètre donc dans le moteur élévateur 20 par la surface supérieure 10b de la nacelle 1 et est poussé à l'intérieur dudit moteur par l'hélice 22 en rotation. Le flux d'air de refroidissement suit alors la trajectoire représentée par les flèches pointillées F2 sur la figure 1. Ce flux d'air traverse le moteur élévateur 20 en léchant les surfaces d'échanges thermiques dudit moteur de sorte que le moteur est refroidi. Le flux d'air chaud - c'est-à-dire le flux d'air réchauffé par le contact avec les surfaces d'échanges thermiques du moteur - s'échappe du moteur par sa face inférieure 25 (c'est-à-dire la face opposée à la face recevant l'hélice 22) et est évacué hors du carénage 10 par le collecteur réversible 30 et en particulier par les canaux 32 de répartition de l'air qui réceptionnent l'air chaud en sortie de moteur 20 et le dirige vers l'ouverture 31. L'évacuation de l'air chaud par les canaux 32 de répartition de l'air et l'ouverture 31 permet de ne générer aucune perturbation aérodynamique et donc de ne pas perturber l'ascension ou la descente de l'aéronef.

Les surfaces d'échanges thermiques peuvent être, par exemple, des ailettes disposées dans les zones périphériques 23, 23' du moteur élévateur 20. De façon classique, ces ailettes peuvent être disposées horizontalement, c'est-à-dire sensiblement perpendiculairement à l'axe 21 du moteur élévateur. Selon une variante, les ailettes sont disposées sensiblement verticalement, c'est-à-dire suivant une direction sensiblement parallèle à l'axe 21 du moteur élévateur ou formant un angle inférieur à 45° par rapport audit axe du moteur. En variante, les surfaces d'échanges thermiques peuvent être des canalisations, des picots, une tubulure ou tout autre type d'échangeur de chaleur connu dans le domaine aérodynamique.

Selon certains modes de réalisation, le carénage 10 comporte, dans une zone proche du moteur élévateur, des bossages 11, 12, 13 adaptés pour générer un effet Venturi. Des premiers bossages 11, 12 peuvent être, par exemple, des portions de la face supérieure 26 présentant une courbure positive au voisinage des entrées d'air dans le moteur élévateur. Des deuxièmes bossages 13, représentés sur la figure 5, peuvent être, par exemple, des portions latérales du carénage présentant une forme arrondie et/ou évasée dans le plan YZ.

En phases d'élévation, les deuxièmes bossages 13 ont pour effet d'accélérer la vitesse du flux d'air à l'entrée dans le moteur élévateur 20, ce qui génère une dépression puisque la pression P1 à l'entrée dans le moteur est supérieure à la pression P2 en sortie du collecteur réversible 30. Cette dépression a pour conséquence de faciliter le passage du flux d'air à travers le moteur élévateur.

Pendant la phase de croisière, représentée sur la figure 2, l'aéronef se déplace dans une direction sensiblement horizontale (direction de X) et les hélices 22 des moteurs élévateurs ne tournent pas. Le flux d'air généré par le déplacement de l'aéronef est orienté suivant une direction sensiblement horizontale, représentée par les flèches en traits pleins F3. Le flux d'air frais est donc orienté suivant une direction à environ 90° de la face inférieure du moteur élévateur. Ce flux d'air frais pénètre alors dans le collecteur réversible 30 par l'ouverture 31 et est dirigé vers la face inférieure 25 du moteur élévateur 20 par les canaux 32 de répartition de l'air, comme représenté par les flèches pointillées F4 sur la figure 2. Ce flux d'air dirigé par les canaux 32 traverse alors le moteur élévateur 20 en léchant les surfaces d'échanges thermiques dudit moteur de sorte que le moteur est refroidi. Le flux d'air chaud - c'est-à-dire le flux d'air réchauffé par le contact avec les surfaces d'échanges thermiques du moteur - s'échappe du moteur élévateur par sa face supérieure 26. L'hélice 22 étant non-travaillante, l'air chaud s'évacue en longeant la face supérieure 10b du carénage. Les éventuelles perturbations aérodynamiques que pourrait représenter la sortie de l'air dans cette zone sont bien moindre que celles générées par l'hélice 22 et son axe 21 et ainsi ne perturbent pas plus le vol de l'aéronef.

Dans cette phase de croisière, le collecteur réversible 30 fonctionne comme une écope qui capture l'air et le transmet vers le moteur élévateur et notamment vers les surfaces d'échanges thermiques dudit moteur élévateur.

Dans les modes de réalisation où le carénage 10 comporte, dans une zone proche du moteur élévateur, des premiers bossages 11, 12, un effet Venturi est généré par lesdits bossages. Ces premiers bossages 11, 12 peuvent, par exemple, être répartis de la façon suivante :
- un bossage 12 sur la face supérieure 10b du carénage, dans une zone entre l'avant du carénage10 et le moteur élévateur 20, par exemple juste avant la zone périphérique avant 23 du moteur élévateur 20, et
- un bossage 11 sur la face supérieure 10b du carénage, dans une zone recouvrant le moteur élévateur 20, par exemple juste avant la zone périphérique arrière 23' du moteur élévateur 20.

Ces premiers bossages 11, 12 ont pour effet d'accélérer la vitesse du flux d'air à la sortie du moteur élévateur 20 (c'est-à-dire à proximité de la face supérieure 26 dudit moteur), ce qui génère une dépression puisque la pression P1 à la sortie du moteur est supérieure à la pression P2 à l'entrée du collecteur réversible 30. Cette dépression a pour conséquence de faciliter le passage du flux d'air à travers le moteur élévateur 20.

La figure 6 représente une vue schématique en coupe longitudinale d'un exemple d'une nacelle de moteur élévateur pour VTOL, selon un autre mode de réalisation. Dans ce mode de réalisation, la nacelle 1 est identique à la nacelle décrite en liaison avec la figure 1, excepté que le collecteur réversible 30 est monté sous le moteur élévateur 20 de sorte que son ouverture 31 soit en aval du flux d'air généré par le déplacement de l'aéronef, c'est-à-dire que l'extrémité fermée soit dirigée vers l'avant de l'aéronef et que l'ouverture 31 soit dirigée vers l'arrière dudit aéronef.

Dans ce mode de réalisation, la dépression créée au niveau de la sortie du collecteur réversible 30 va aspirer l'air car la pression P1 en entrée du moteur élévateur 20 est supérieure à la pression P2 en sortie du collecteur réversible 30. "Pour augmenter cette dépression, la face supérieure 10b du carénage peut comporter, par exemple, des troisièmes bossages 14. Ces troisième bossages 14 peuvent être localisés sur la face supérieure 10b du carénage, dans une zone recouvrant le moteur élévateur 20, par exemple juste après la zone périphérique avant 23 du moteur élévateur 20. De tels bossages 14, par une forme adaptée, favorisent l'entrée du flux d'air dans le moteur élévateur 20.

Quel que soit le mode de réalisation de la nacelle de moteur élévateur décrite précédemment, un dispositif de circulation d'air supplémentaire peut être installé dans la nacelle pour augmenter le flux d'air ou la vitesse du flux d'air traversant le moteur élévateur. Ce dispositif de circulation peut être, par exemple, un ventilateur, un compresseur ou tout autre dispositif permettant une circulation de l'air à l'intérieur de la nacelle. Ce dispositif de circulation peut être un dispositif indépendant ou un dispositif piloté en rotation par le moteur élévateur ou par l'axe de l'hélice.

Bien que décrite à travers un certain nombre d'exemples, variantes et modes de réalisation, la nacelle de moteur électrique de VTOL selon l'invention comprend divers variantes, modifications et perfectionnements qui apparaîtront de façon évidente à l'homme du métier, étant entendu que ces variantes, modifications et perfectionnements font partie de la portée de l'invention tant qu'ils sont couverts par la portée des revendications annexées.

## Revendications

1. Nacelle de moteur électrique (1) d'aéronef à décollage et atterrissage verticaux (VTOL) comportant :
- un moteur électrique (20),
- un carénage (10) dans lequel est logé ledit moteur électrique (20) équipé d'au moins une hélice (22) s'étendant à l'extérieur d'une face supérieure (10b) du carénage, et
- un dispositif de refroidissement adapté pour refroidir le moteur électrique lorsque l'aéronef est en phases de décollage, de croisière et d'atterrissage et comportant un collecteur réversible (30) d'alimentation et d'échappement de fluide de refroidissement, adapté pour, alternativement :
∘en phase de croisière, recevoir un flux de fluide froid (F3) généré par le déplacement de l'aéronef et diriger ce flux de fluide, à travers le moteur (20), vers une sortie située en regard de l'hélice (22), et
∘en phase de décollage ou d'atterrissage, réceptionner un flux de fluide de refroidissement (F2) transmis par l'hélice (22) et ayant transité à travers le moteur (20), le flux de fluide étant réchauffé par contact avec des surfaces d'échanges thermiques dudit moteur.

2. Nacelle de moteur électrique selon la revendication 1, **caractérisée en ce que** le collecteur réversible est positionné sur une face inférieure (10a) du carénage, opposée à la face supérieure (10b).

3. Nacelle de moteur électrique selon la revendication 1 ou 2, **caractérisée en ce que** le collecteur réversible (30) est une chambre à profil aérodynamique équipée d'une ouverture (31) d'admission et d'échappement du fluide et d'une pluralité de canaux de répartition (32) du fluide.

4. Nacelle de moteur électrique selon la revendication 3, **caractérisée en ce que** les canaux de répartition (32) sont répartis dans une structure interne du collecteur réversible (30) entre l'ouverture (31) d'admission et d'échappement et une face inférieure (25) du moteur de sorte à diriger le flux de fluide depuis l'ouverture vers des surfaces d'échanges thermiques du moteur ou depuis la face inférieure (25) du moteur vers l'ouverture (31) du collecteur réversible (30).

5. Nacelle de moteur électrique selon l'une quelconque des revendications 1 à 4, **caractérisée en ce que** le collecteur réversible (30) présente une forme d'écope dans le carénage.

6. Nacelle de moteur électrique selon l'une quelconque des revendications 1 à 4, **caractérisée en ce que** le collecteur réversible (30) présente une forme de prise NACA dans le carénage.

7. Nacelle de moteur électrique selon l'une quelconque des revendications 1 à 6, **caractérisée en ce que** le carénage (10) entourant le moteur électrique comporte une forme aérodynamique s'étendant en s'évasant de la face supérieure (26) vers la face inférieure (25) dudit moteur, de sorte à générer une dépression entre la face supérieure et la face inférieure.

8. Nacelle de moteur électrique selon l'une quelconque des revendications 1 à 7, **caractérisée en ce que** la face supérieure (10b) du carénage entourant le moteur électrique comporte au moins un bossage (11, 12) générant un effet Venturi.

9. Nacelle de moteur électrique selon l'une quelconque des revendications 4 à 8, **caractérisée en ce que** les surfaces d'échange du moteur électrique s'étendent sensiblement verticalement entre la face inférieure (25) et la face supérieure (26) du moteur électrique.

10. Nacelle de moteur électrique selon l'une quelconque des revendications 3 à 9, **caractérisée en ce que** l'ouverture (31) du collecteur réversible (30) est dirigée vers l'avant du carénage (10).

11. Aéronef à décollage et atterrissage verticaux (VTOL) comportant au moins une nacelle de moteur électrique (1) selon l'une quelconque des revendications précédentes.

## Patentansprüche

1. Elektromotorgondel (1) für ein Luftfahrzeug, das senkrecht startet und landet (Take-off and Landing Aircraft VTOL), mit:
- - einem Elektromotor (20),
- einer Verkleidung (10), in der der Elektromotor (20) untergebracht ist, ausgestattet mit mindestens einem Propeller (22), der sich außerhalb einer Oberseite (10b) der Verkleidung erstreckt, und
- einer Kühlvorrichtung zum Kühlen des Elektromotors, wenn das Luftfahrzeug in der Start-, Flug- und Landephase ist, mit einem umkehrbaren Kollektor (30) für die Versorgung und Abführung des Kühlmittels, geeignet für, entweder:
∘ um in der Flugphase einen durch die Bewegung des Luftfahrzeugs generierten kalten Fluidstrom (F3) aufzunehmen und diesen Fluidstrom durch den Motor (20) zu einem Ausgang, der sich gegenüber dem Propeller (22) befindet, zu leiten, oder
∘ um in der Start- oder Landephase einen vom Propeller (22) übertragenen Kühlmittelstrom (F2) aufzunehmen, wobei der Fluidstrom durch den Motor (20) gelaufen und durch Kontakt mit den Wärmeaustauschflächen des Motors erwärmt wurde.

2. Elektromotorgondel nach Anspruch 1, **dadurch gekennzeichnet, dass** der umkehrbare Kollektor (30) auf einer Unterseite (10a) der Verkleidung, der Oberseite (10b) gegenüberliegend, positioniert ist.

3. Elektromotorgondel nach Anspruch 1 oder 2, **dadurch gekennzeichnet, dass** der umkehrbare Kollektor (30) eine Kammer mit aerodynamischem Profil ist, die mit einer Einlass- und Ablauföffnung (31) für den Fluidstrom und einer Vielzahl von Verteilerkanälen (32) für den Fluidstrom ausgestattet ist.

4. Elektromotorgondel nach Anspruch 3, **dadurch gekennzeichnet, dass** die Verteilerkanäle (32) in einer Innenstruktur des umkehrbaren Kollektors (30) zwischen der Einlass- und Ablauföffnung (31) und einer Unterseite (25) des Motors verteilt sind, um so den Fluidstrom von der Öffnung in Richtung der Wärmeaustauschflächen des Motors oder von der Unterseite (25) des Motors zur Öffnung (31) des umkehrbaren Kollektors (30) zu lenken.

5. Elektromotorgondel nach einem der Ansprüche 1 bis 4, **dadurch gekennzeichnet, dass** der umkehrbare Kollektor (30) eine Schöpfkellenform in der Verkleidung aufweist.

6. Elektromotogondel nach einem der Ansprüche 1 bis 4, **dadurch gekennzeichnet, dass** der umkehrbare Kollektor (30) eine NACA-Öffnung in der Verkleidung aufweist.

7. Elektromotorgondel nach einem der Ansprüche 1 bis 6, **dadurch gekennzeichnet, dass** die Verkleidung (10) um den Elektromotor eine aerodynamische Form umfasst, die sich von der Oberseite (26) ausweitend zur Unterseite (25) des Motors erstreckt, so dass zwischen der Oberseite und der Unterseite ein Unterdruck erzeugt wird.

8. Elektromotorgondel nach einem der Ansprüche 1 bis 7, **dadurch gekennzeichnet, dass** die den Elektromotor umgebende Oberseite (10b) der Verkleidung mindestens eine vorspringende Nabe (11, 12) umfasst, die einen Venturi-Effekt erzeugt.

9. Elektromotorgondel nach einem der Ansprüche 4 bis 8, **dadurch gekennzeichnet, dass** sich die Austauschflächen des Elektromotors im Wesentlichen senkrecht zwischen der Unterseite (25) und der Oberseite (26) des Elektromotors erstrecken.

10. Elektromotorgondel nach einem der Ansprüche 3 bis 9, **dadurch gekennzeichnet, dass** die Öffnung (31) des umkehrbaren Kollektors (30) zur Vorderseite der Verkleidung (10) gerichtet ist.

11. Senkrecht startendes und landendes Luftfahrzeug (Take-off and Landing Aircraft VTOL) mit mindestens einer Elektromotorgondel (1) nach einem der vorhergehenden Ansprüche.

## Claims

1. Electric motor nacelle (1) for a vertical take-off and landing (VTOL) aircraft comprising:
- a electric motor (20),
- a fairing (10) wherein the electric motor (20) is housed equipped with at least one propeller (22) extending outwards from a top face (10b) of the fairing, and
- a cooling device designed to cool the electric motor when the aircraft is in take-off, cruise and landing phases and comprising a reversible coolant fluid supply and exhaust manifold (30), designed, alternately:
∘in the cruise phase, to receive a stream of cold fluid (F3) generated by the movement of the aircraft and to convey this stream of fluid, through the motor (20), towards an outlet situated opposite the propeller (22), and
∘in the take-off or landing phase, to receive a stream of cooling fluid (F2) transmitted by the propeller (22) and having passed through the motor (20), the stream of fluid being heated by contact with heat exchange surfaces of said motor.

2. Electric motor nacelle according to claim 1, **characterised in that** the reversible manifold is positioned on a bottom face (10a) of the fairing, opposite the top face (10b).

3. Electric motor nacelle according to claim 1 or 2, **characterised in that** the reversible manifold (30) is an aerodynamic profile chamber provided with an intake and exhaust opening (31) of the fluid and with a plurality of distribution channels (32) of the fluid.

4. Electric motor nacelle according to claim 3, **characterised in that** the distribution channels (32) are distributed in an internal structure of the reversible manifold (30) between the intake and exhaust opening (31) and a bottom face (25) of the motor in such a way as to convey the stream of fluid from the opening to the heat exchange surfaces of the motor or from the bottom face (25) of the motor to the opening (31) of the reversible manifold (30).

5. Electric motor nacelle according to any of claims 1 to 4, **characterised in that** the reversible manifold (30) has a scoop shape in the fairing.

6. Electric motor nacelle according to any of claims 1 to 4, **characterised in that** the reversible manifold (30) has a NACA grip shape in the fairing.

7. Electric motor nacelle according to any of claims 1 to 6, **characterised in that** the fairing (10) surrounding the electric motor comprises an aerodynamic shape extending by flaring from the top face (26) to the bottom face (25) of said motor, in such a way as to generate a negative pressure between the top face and the bottom face.

8. Electric motor nacelle according to any of claims 1 to 7, **characterised in that** the top face (10b) of the fairing surrounding the electric motor comprises at least one boss (11, 12) generating a Venturi effect.

9. Electric motor nacelle according to any of claims 4 to 8, **characterised in that** the exchange surfaces of the electric motor extend substantially vertically between the bottom face (25) and the top face (26) of the electric motor.

10. Electric motor nacelle according to any of claims 3 to 9, **characterised in that** the opening (31) of the reversible manifold (30) is directed towards the front of the fairing (10).

11. Vertical take-off and landing (VTOL) aircraft comprising at least one electric motor nacelle (1) according to any preceding claim.
